# EUROPÄISCHE PATENTANMELDUNG

(11) **EP 3 721 973 A1**
(43) Veröffentlichungstag der Anmeldung: **14.10.2020**
(21) Anmeldenummer: 19168503.1
(22) Anmeldetag: 10.04.2019
(51) Int. Cl.: B01D 53/86, B05D 7/14, B05D 7/20, B05B 7/00, B01D 53/90, B05B 1/00, H01B 13/06, H01B 13/30, C23D 5/00

(54) **VORRICHTUNG UND VERFAHREN ZUR HERSTELLUNG VON LACKDRÄHTEN**

(71) Anmelder: P & F Maschinenbau GmbH, 3002 Purkersdorf (AT)
(72) Erfinder: Die Erfindernennung liegt noch nicht vor
(74) Vertreter: Sonn & Partner Patentanwälte

(57) **Zusammenfassung**

Die Erfindung betrifft eine Vorrichtung (1) und ein Verfahren zur Herstellung von Lackdrähten, mit einer Auftragsvorrichtung (3) zum Auftragen zumindest einer Lackschicht, einem Ofen (4) zum Verfestigen der Lackschicht und mit einer Abgasreinigungsvorrichtung (7) zum Entfernen von zumindest Stickoxiden aus einem Abgas (9) des Ofens (4), wobei die Abgasreinigungsvorrichtung (7) eine Anlage (13) zur selektiven katalytischen Reduktion von Stickoxiden in dem Abgas (9) des Ofens und eine Zufuhreinrichtung (11) zum Zuführen eines Reduktionsmittels, bevorzugt einer ammoniakhaltigen Verbindung, insbesondere Harnstofflösung, in das Abgas (9) des Ofens (4), aufweist, wobei die Zufuhreinrichtung (11) zumindest eine Austrittsöffnung aufweist, die derart ausgestaltet ist, dass das Reduktionsmittel im Wesentlichen in Strömungsrichtung des Abgases (9) aus der Austrittsöffnung austritt.

## Beschreibung

Die Erfindung betrifft eine Vorrichtung zur Herstellung von Lackdrähten, mit einer Auftragsvorrichtung zum Auftragen zumindest einer Lackschicht, einem Ofen zum Verfestigen der Lackschicht und mit einer Abgasreinigungsvorrichtung zum Entfernen von zumindest Stickoxiden aus einem Abgas des Ofens, wobei die Abgasreinigungsvorrichtung eine Anlage zur selektiven katalytischen Reduktion von Stickoxiden in dem Abgas des Ofens und eine Zufuhreinrichtung zum Zuführen eines Reduktionsmittels, bevorzugt einer ammoniakhaltigen Verbindung, insbesondere Harnstofflösung, in das Abgas des Ofens, aufweist.

Weiters betrifft die Erfindung ein Verfahren zur Herstellung von Lackdrähten, wobei auf einen Metalldraht zumindest eine Lackschicht aufgetragen wird, welche in einem Ofen verfestigt wird, wobei ein Abgas aus dem Ofen zumindest von Stickoxiden befreit wird, wobei das Abgas aus dem Ofen einer selektiven katalytischen Reduktion von Stickoxiden unterzogen wird, wobei ein Reduktionsmittel, bevorzugt eine ammoniakhaltige Verbindung, insbesondere eine Harnstofflösung, über eine Zufuhreinrichtung dem Abgas zugeführt wird.

Eine solche Vorrichtung bzw. solches Verfahren zur Herstellung von Lackdrähten mit einem Umluftofen zur Trocknung und Härtung von auf den Draht aufgebrachten Lackschichten ist aus dem Stand der Technik bekannt. Das Abgas des Umluftofens, die prozessbedingt Stickoxide (NOₓ) wie Stickstoffmonoxid (NO) und Stickstoffdioxid (NO₂) enthalten, werden durch eine Abgasreinigungsvorrichtung geleitet, die eine Anlage zur selektiven katalytischen Reduktion aufweist. Die Anlage weist Entstickungskatalysatoren und einen den Entstickungskatalysatoren nachgeschalteten Oxidationskatalysator auf. In Strömungsrichtung des Abgases vor den Entstickungskatalysatoren ragt eine Zerstäubungsdüse senkrecht zur Strömungsrichtung des Abgases in ein gerades, rohrförmiges Gehäuse hinein, in dem das Abgas zu den Katalysatoren transportiert wird. Über die Zerstäubungsdüse wird ein Harnstoffhaltiges Reduktionsmittel in das Abgas in senkrecht zur Strömungsrichtung des Abgases eingedüst. Der Harnstoff wird in dem Abgas mithilfe von Thermolyse und Hydrolyse zu Ammoniak (NH₃) umgewandelt, wobei das Ammoniak zur Reduktion der Stickoxide zu Stickstoff (N₂) und Wasser (H₂O) in den Entstickungskatalysatoren verwendet wird. Zwischen der Eindüsung des Reduktionsmittels und den Entstickungskatalysatoren sind Mischeinrichtungen in dem rohrförmigen Gehäuse angeordnet, um eine Umlenkung des Abgasstroms zu bewirken. Nachteilig dabei ist, dass aufgrund der Eindüsung das eingedüste Reduktionsmittel einen Film auf einer inneren Oberfläche des rohrförmigen Gehäuses bilden kann. Ein weiterer Nachteil ist, dass das Reduktionsmittel nicht optimal mit dem Abgas gemischt wird und somit Harnstoff nicht vollständig thermolysiert und hydrolysiert wird, sodass es zu Ablagerungen von festem Harnstoff im Bereich der Eindüsung und/oder in den Entstickungskatalysatoren kommen kann.

Die Aufgabe der vorliegenden Erfindung besteht darin, zumindest einzelne Nachteile von bekannten Anlagen zur Herstellung von Lackdrähten zu lindern bzw. zu beheben. Die Erfindung setzt sich insbesondere zum Ziel, die Durchmischung des eingebrachten Reduktionsmittels mit dem Abgas zu verbessern.

Die vorliegende Erfindung stellt eine Vorrichtung zur Herstellung von Lackdrähten zur Verfügung, mit einer Auftragsvorrichtung zum Auftragen zumindest einer Lackschicht, einem Ofen zum Verfestigen der Lackschicht und mit einer Abgasreinigungsvorrichtung zum Entfernen von zumindest Stickoxiden aus einem Abgas des Ofens, wobei die Abgasreinigungsvorrichtung eine Anlage zur selektiven katalytischen Reduktion von Stickoxiden in dem Abgas des Ofens und eine Zufuhreinrichtung zum Zuführen eines Reduktionsmittels, bevorzugt einer ammoniakhaltigen Verbindung, insbesondere Harnstofflösung, in das Abgas des Ofens, aufweist, wobei die Zufuhreinrichtung zumindest eine Austrittsöffnung aufweist, die derart ausgestaltet ist, dass das Reduktionsmittel im Wesentlichen in Strömungsrichtung des Abgases aus der Austrittsöffnung austritt.

Dadurch wird die genannte Aufgabe gelöst.

Dementsprechend stellt die Erfindung auch ein Verfahren zur Herstellung von Lackdrähten zur Verfügung, wobei auf einen Metalldraht zumindest eine Lackschicht aufgetragen wird, welche in einem Ofen verfestigt wird, wobei ein Abgas aus dem Ofen zumindest von Stickoxiden befreit wird, wobei das Abgas aus dem Ofen einer selektiven katalytischen Reduktion von Stickoxiden unterzogen wird, wobei ein Reduktionsmittel, bevorzugt eine ammoniakhaltige Verbindung, insbesondere eine Harnstofflösung, über eine Zufuhreinrichtung dem Abgas zugeführt wird, wobei das Reduktionsmittel im Wesentlichen in Strömungsrichtung des Abgases eingebracht wird.

Auch dadurch wird die genannte Aufgabe gelöst.

Mit dem erfindungsgemäßen Verfahren können Filmbildungen und Ablagerungen des Reduktionsmittels reduziert werden. Durch das im Wesentlichen in Strömungsrichtung des Abgases über die Austrittsöffnung eingebrachte Reduktionsmittel wird der Transport des Reduktionsmittels senkrecht zur Strömungsrichtung des Abgases in Richtung eines Randes des Abgasstroms minimiert, sodass Ablagerungen an Wänden, innerhalb denen das Abgas geführt wird, reduziert wird. Dadurch kann eine homogene Einbringung des Reduktionsmittels in das Abgas erzielt werden, sodass sich das Reduktionsmittel relativ homogen im Strömungsquerschnitt des Abgases verteilt. Dabei wird das Reduktionsmittel im GleichstromPrinzip in das strömende Abgas eingebracht, sodass das Reduktionsmittel bei Austritt aus der Austrittsöffnung im Wesentlichen in die gleiche Richtung die das Abgas, in das das Reduktionsmittel eingebracht wird, strömt.

Gemäß einer bevorzugten Ausführungsform ist ein Teil der Zufuhreinrichtung in einem gebogenen Rohrstück angeordnet, wobei das gebogene Rohrstück eine Krümmung zwischen 60 und 150°, bevorzugt zwischen 75 und 120°, besonders bevorzugt zwischen 80 und 100°, insbesondere im Wesentlichen 90° aufweist. Vorteilhafterweise kann dadurch ein vom Abgas umströmter Teil der Zufuhreinrichtung, die das Reduktionsmittel dem Abgas zuführt, ohne Richtungsänderungen ausgeführt sein, sodass der Querschnitt der Zufuhreinrichtung quer zur Strömungsrichtung des Abgases und somit der Strömungswiderstand des Abgases durch die Zufuhreinrichtung reduziert ist. Weiters ist dadurch eine Reinigung der Zufuhreinrichtung einfacher, indem Fremdpartikel und/oder Harnstoff, die sich an der Austrittsöffnung oder in der Zufuhreinrichtung ansammeln können, über einen externen Zugang einfach gereinigt werden können. Durch die gerade Ausführung des vom Abgas umströmten Teils der Zufuhreinrichtung weist in diesem Abschnitt die Zufuhreinrichtung keine Risikozonen wie beispielsweise Knicke, Ecken, vorstehende Kanten, Fugen, Schweißnähte oder Totzonen mit Wirbeln auf, an denen es bereits bei der Zufuhr des Reduktionsmittels zu Ablagerungen kommen kann. Ein weiterer Vorteil der geraden Ausführung des vom Abgas umströmten Teils der Zufuhreinrichtung ist die wesentlich einfachere und preiswertere Fertigung der Zufuhreinrichtung.

Gemäß einer besonders bevorzugten Ausführungsform ist der in dem gebogenen Rohrstück angeordnete Teil der Zufuhreinrichtung abgesehen von der Austrittsöffnung von einem Schutzrohr umhüllt. Dadurch wird die Zufuhreinrichtung vom strömenden Abgas abgeschirmt, sodass eine Kondensation von beispielsweise Lackrückständen an kühlen Stellen der Zufuhreinrichtung reduziert oder unterbunden werden kann.

Zum Schutz der Austrittsöffnung ist es günstig, wenn sich das Schutzrohr in Strömungsrichtung des Abgases im Wesentlichen bis zur Austrittsöffnung erstreckt. Vorteilhafterweise ist dadurch die Austrittsöffnung vom Schutzrohr vollständig umhüllt und wird somit vor hohen Temperaturen oder Strömungseinflüssen des vorbeiströmenden Abgases, wie beispielsweise Scherströmungen des Abgases, geschützt.

Weiters ist es günstig, wenn die Zufuhreinrichtung eine Zufuhrleitung mit der zumindest einen Austrittsöffnung aufweist, wobei die Austrittsöffnung eine Düse aufweist, die im Wesentlichen in Strömungsrichtung des Abgases zum Eindüsen des Reduktionsmittels im Wesentlichen in Strömungsrichtung des Abgases ausgerichtet ist. Dadurch ist ein präzises Eindüsen des Reduktionsmittels in das Abgas möglich. Bevorzugt ist dabei die Zufuhrleitung eine Düsenlanze.

Zur verbesserten Durchmischung des Reduktionsmittels mit dem Abgas ist es günstig, wenn die Düse der Austrittsöffnung eine Zerstäubungsdüse zum Zerteilen des Reduktionsmittels, insbesondere in feine Tröpfchen, ist. Vorteilhafterweise kann somit das Reduktionsmittel fein verteilt in Form eines Sprays in das Abgas eingedüst werden, um bei flüssigen Anteilen des Reduktionsmittels diese rasch zu verdampfen.

Gemäß einer bevorzugten Ausführungsform ist die Zerstäubungsdüse eine Zweistoffdüse, die eine Düseninnenkammer und eine Düsenau-ßenkammer aufweist, wobei die Düseninnenkammer zum Zuführen eines ersten Mediums ist, wobei das erste Medium das Reduktionsmittel, bevorzugt die ammoniakhaltige Verbindung, insbesondere die Harnstofflösung, beinhaltet, wobei die Düsenaußenkammer zum Zuführen eines zweiten Mediums, bevorzugt einer Druckluft, ist. Dadurch kann das Reduktionsmittel mithilfe von Druckluft in das Abgas eingedüst werden, um eine feine Verteilung des Reduktionsmittels im Abgas zu ermöglichen. Bevorzugt liegt der Druck der Druckluft zwischen 1 und 20 bar, besonders bevorzugt zwischen 3 und 12 bar, insbesondere zwischen 5 und 7 bar. Vorteilhafterweise sind mit der Zweistoffdüse kleinere Öffnungswinkel des Sprays (Spraywinkel) möglich, sodass der Transport des Reduktionsmittels beim Eindüsen in das Abgas zum Grenzbereich der Abgasströmung reduziert oder vermieden wird.

Gemäß einer besonders bevorzugten Ausführungsform ist die Zweistoffdüse eine außenmischende Zweistoffdüse, die eine Mischkammer aufweist, wobei die Düseninnenkammer und die Düsenaußenkammer getrennt mit dem Düsenaustritt zum getrennten Austreten des ersten Mediums und des zweiten Mediums, bevorzugt der Druckluft, aus der Zweistoffdüse verbunden sind. Außenmischend bedeutet in diesem Zusammenhang, dass das Reduktionsmittel durch Unterdruck oder Schwerkraft erst im Düsenaustritt in den Strom des zweiten Mediums, das zur Zerstäubung dient, geführt und dort zerstäubt wird. Vorteilhafterweise weist die Zweistoffdüse ein Rohr-in-Rohr-System auf, bei dem ein Innenrohr das erste Medium zur Düseninnenkammer und ein um das Innenrohr koaxial angeordnete Au-ßenrohr das zweite Medium zur Düsenaußenkammer transportiert. Dadurch kann das Reduktionsmittel im ersten Medium durch das zweite Medium thermisch vom Abgas abgeschottet werden, um eine Überhitzung der Düse zu vermeiden. Das erste Medium kann bei der außenmischenden Zweistoffdüse zusätzlich zum Reduktionsmittel eine weitere Druckluft beinhalten.

Gemäß einer weiteren besonders bevorzugten Ausführungsform ist die Zweistoffdüse eine innenmischende Zweistoffdüse, die einen Düsenaustritt aufweist, wobei die Düseninnenkammer und die Düsenaußenkammer mit der Mischkammer zum Mischen des ersten Mediums mit dem zweiten Medium, bevorzugt der Druckluft, in der Mischkammer verbunden sind. Innenmischend bedeutet in diesem Zusammenhang, dass das Reduktionsmittel und das zweite Medium, das zur Zerstäubung dient, in der Mischkammer noch vor Düsenaustritt gemischt werden. Dadurch kann ein besonders feiner Spray generiert werden.

Um die Durchmischung des Reduktionsmittels mit dem Abgas weiter zu erhöhen ist es günstig, wenn die Abgasreinigungsvorrichtung in Strömungsrichtung des Abgases nach der Zufuhreinrichtung und vor der Anlage zur selektiven katalytischen Reduktion von Stickoxiden ein konusförmiges Rohrstück zum Durchströmen des Abgases aufweist, wobei der Durchmesser des konusförmigen Rohrstücks in Strömungsrichtung des Abgases zunimmt, wobei das zugeführte Reduktionsmittel zumindest abschnittsweise in das konusförmige Rohrstück eingebracht wird. Dadurch kann das eingebrachte Reduktionsmittel sich weiter in radialer Richtung zur Strömung des Abgases ausbreiten, ohne eine Wand zu berühren, die die Abgasströmung begrenzt. Ein weiterer Vorteil ist die erhöhte Verweilzeit des Reduktionsmittels im Abgas durch die abnehmende Strömungsgeschwindigkeit des Abgases, die durch die Querschnittserweiterung hervorgerufen wird. Vorteilhafterweise kann dadurch eine Thermolyse und/oder Hydrolyse des Reduktionsmittels im konusförmigen Rohrstück stattfinden, sodass auch bei hohen Dosierraten des Reduktionsmittels der dem konusförmigen Rohrstück nachgeschalteten Anlage zur selektiven katalytischen Reduktion ein vollständig thermolysiertes und/oder hydrolysiertes Reduktionsmittel zugeführt werden kann.

Weiter ist es günstig, wenn das eingebrachte Reduktionsmittel, bevorzugt die eingebrachte ammoniakhaltige Verbindung, insbesondere die eingebrachte Harnstofflösung, flüssig ist und in dem konusförmigen Rohrstück verdampft, wobei Ammoniak gebildet wird. Dadurch kann ein flüssig eingebrachtes Reduktionsmittel im konusförmigen Rohrstück verdampfen und somit der dem konusförmigen Rohrstück nachgeschalteten Anlage zur selektiven katalytischen Reduktion ein vollständig verdampftes Reduktionsmittel zugeführt werden. Dies reduziert oder unterbindet Filmbildungen und Ablagerungen in der Anlage zur selektiven katalytischen Reduktion.

Zur verbesserten Strömungsführung ist es günstig, wenn das konusförmige Rohrstück einen halben Öffnungswinkel zwischen 1 und 10°, bevorzugt zwischen 2 und 7°, besonders bevorzugt zwischen 3 und 5°, insbesondere im Wesentlichen 4° aufweist. Vorteilhafterweise passt sich dadurch die Abgasströmung an den Verlauf der Innenwand des konusförmigen Rohrstücks an, sodass Ablösungen der Strömung an der Innenwand vermieden werden. Dadurch wird eine Bildung von Strömungswirbeln unterdrückt, die zwar die Durchmischung des Reduktionsmittels mit dem Abgas erhöhen, jedoch zu einer inhomogenen Verteilung des Reduktionsmittels im Abgas führen können.

Gemäß einer bevorzugten Ausführungsform weist die Anlage zur selektiven katalytischen Reduktion zumindest einen Entstickungskatalysator und zumindest einen Oxidationskatalysator zum Abbau von Kohlenmonoxid und/oder Kohlenwasserstoffen und/oder Ammoniak auf, wobei bevorzugt zumindest zwei, insbesondere genau zwei, Entstickungskatalysatoren in Strömungsrichtung des Abgases hintereinander vorgesehen sind. Dadurch kann das Reduktionsmittel die Stickoxide in Stickstoff und Wasser umwandeln. Vorteilhafterweise reagiert in den Entstickungskatalysatoren aus dem Reduktionsmittel gebildetes Ammoniak mit den Stickoxiden in dem Abgas katalytisch zu Stickstoff und Wasser. Im Oxidationskatalysator können Schadstoffe wie Kohlenmonoxid (CO) und unverbrannte Kohlenwasserstoffe (CₘHₙ) zu Kohlendioxid (CO₂) und Wasser reagieren.

Gemäß einer besonders bevorzugten Ausführungsform weist der zumindest eine Entstickungskatalysator einen ersten beschichteten Metallträger und einen ersten Washcoat und der Oxidationskatalysator einen zweiten Metallträger und einen zweiten Washcoat auf, wobei bevorzugt der erste Washcoat Oxide von Titan, Vanadium und/oder Wolfram und der zweite Washcoat Platin und/oder Palladium aufweist. Aufgrund der beschichteten Metallträger sind der zumindest eine Entstickungs- und der zumindest eine Oxidationskatalysator mechanisch beständiger als beispielsweise vollextrudierte keramische Katalysatoren, sodass diese bei höheren Temperaturen eingesetzt werden können und besser vor mechanischen Beschädigungen beim Transport geschützt sind. Vorteilhafterweise wird durch eine Aufprägung des ersten bzw. zweiten Washcoats auf den ersten bzw. zweiten beschichteten Metallträger die Reaktionsfläche des zumindest einen Entstickungs- bzw. Oxidationskatalysators erhöht, sodass die Effizienz der ablaufenden chemischen Reaktionen in den Katalysatoren gesteigert wird.

Gemäß einer bevorzugten Ausführungsform werden Mengenstrom des Abgases und die Konzentrationen der Stickoxide in dem Abgas in Strömungsrichtung vor dem Zuführen des Reduktionsmittels und in Strömungsrichtung nach der selektiven katalytischen Reduktion ermittelt, wobei basierend auf dem ermittelten Mengenstrom des Abgases und den ermittelten Konzentrationen der Stickoxide im Abgas die Menge des eingebrachten Reduktionsmittels, bevorzugt der eingebrachten ammoniakhaltigen Verbindung, insbesondere der eingebrachten Harnstofflösung, ermittelt wird. Dadurch kann die Menge des Reduktionsmittels, das in das Abgas eingebracht wird, auf Basis der ermittelten Konzentrationen der Stickoxide im Abgas ermittelt werden und diese Menge über die Zufuhreinrichtung dem Abgas zugeführt werden.

Gemäß einer besonders bevorzugten Ausführungsform wird basierend auf den ermittelten Konzentrationen der Stickoxide im Abgas die zur Reduktion der Stickoxide im Abgas stöchiometrisch erforderliche Menge des eingebrachten Reduktionsmittels, bevorzugt der eingebrachten ammoniakhaltigen Verbindung, insbesondere der eingebrachten Harnstofflösung, ermittelt. Dadurch wird vorteilhafterweise genau die Menge des Reduktionsmittels dem Abgas zugeführt, die für die im Abgas vorhandenen Stickoxide stöchiometrisch erforderlich ist. Vorteilhafterweise wird für die Ermittlung der erforderlichen Menge des Reduktionsmittels zusätzlich zu den ermittelten Konzentrationen der Stickoxide eine gemessene Temperatur des Abgases und ein gemessener dynamischer Druck des Abgases zur Ermittlung des Massenstroms des Abgases berücksichtigt.

Die Erfindung wird nachstehend anhand des in den Zeichnungen gezeigten, nicht einschränkenden Ausführungsbeispiels weiter erläutert.
Fig. 1 zeigt schematisch eine Vorrichtung zur Herstellung von Lackdrähten;
Fig. 2 zeigt schematisch einen Schnitt einer erfindungsgemäßen Abgasreinigungsvorrichtung für die Vorrichtung gemäß Fig. 1;
Fig. 3 zeigt schematisch eine schaubildliche Ansicht einer Zufuhreinrichtung der Abgasreinigungsvorrichtung gemäß Fig. 2;
Fig. 4 zeigt schematisch einen Schnitt einer ersten Ausführungsform einer Zweistoffdüse der Zufuhreinrichtung gemäß Fig. 3;
Fig. 5 zeigt schematisch einen Schnitt einer zweiten Ausführungsform einer Zweistoffdüse der Zufuhreinrichtung gemäß Fig. 3.

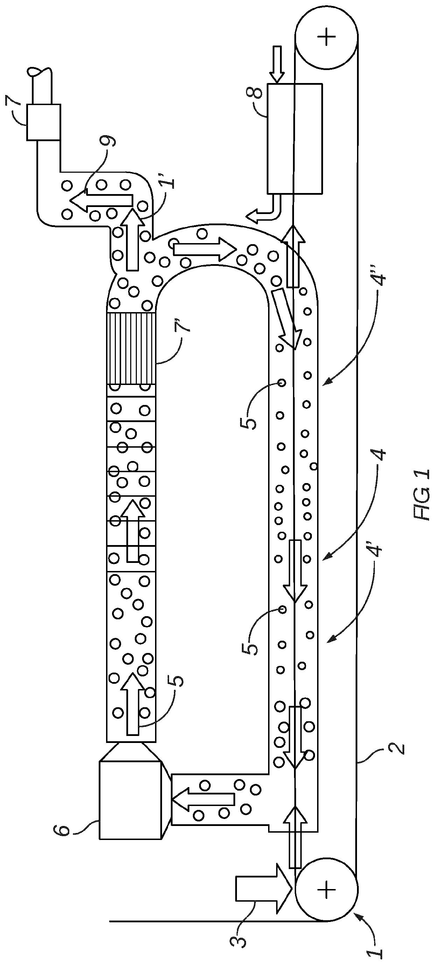

Fig. 1 zeigt eine Vorrichtung 1 zur Herstellung von Lackdrähten 2. Die Vorrichtung 1 weist eine Auftragsvorrichtung 3 zum Auftragen mehrerer Lackschichten auf einen Metalldraht auf. Zudem ist ein Ofen 4 zum Trocknen und Aushärten der Lackschichten auf dem Metalldraht vorgesehen. Der Ofen 4 weist eine Trocknungszone 4' und eine Aushärtezone 4" auf. Im Ofen 4 wird Umluft 5 mittels eines Ventilators 6 im Kreis geführt. Die Umluft 5 wird, wie nachstehend im Detail erläutert wird, mit verschiedenen Schadstoffen angereichert. Zudem ist ein Umluft-Oxidationskatalysator 7' vorgesehen sowie in einer Abgase 9 führenden Leitung eine Abgasreinigungsanlage 7 zum Entfernen der Schadstoffe, insbesondere von Stickoxiden, aus dem Abgas des Ofens. Weiters ist in Fig. 1 ein Kühler 8 zum Abkühlen des Lackdrahtes ersichtlich.

Die Drahtisolierung wird durch die Trocknung und Härtung von den auf den Draht aufgebrachten flüssigen Lackschichten in dem Umluftofen 4 bei ca. 550 - 700°C hergestellt. Da der Auftrag der erforderlichen Endbeschichtungsdicke in mehreren Durchgängen erfolgen muss, werden bis zu 24 Deckungen desselben Drahtes durch den Trocknungs- bzw. Härtungsofen geführt. Während der Trocknung der flüssigen Lackschichten auf dem Metalldraht werden Lacklösemittel bei hoher Temperatur ausgedampft, wodurch sich die Umluft der Lackdrahtanlage längs der Trocknungszone kontinuierlich mit Lösemitteldampf sättigt.

Die mit Lösemittel beladene Luft durchströmt während des Umluftbetriebs ständig einen Palladium-Platin-Katalysator, welcher als Umluftoxidationskatalysator 7' dient, wodurch die Kohlenwasserstoffe (CₘHₙ = Lösemitteldampf) mit dem Sauerstoff O₂ der in den Ofen eingesaugten Frischluft exotherm zu Kohlendioxid CO₂ und Wasserdampf H₂O oxidiert werden. Während dieser exothermen chemischen Reaktion wird daher thermische Energie frei, welche die Prozessluft beheizt. Allerdings kann dort verstärkt auch der Lösemittelstickstoff zu Stickstoffoxiden NOₓ (vorwiegend Stickstoffmonoxid NO, Stickstoffdioxid NO₂) oxidiert werden. Die Umsatzrate im Umluft-Oxidationskatalysator 7' steigt grundsätzlich mit steigendem Temperaturniveau an. In Bereichen außerhalb des Katalysators kann das Lösemittel-Luft-Gemisch aufgrund des ausreichend hohen Temperaturniveaus (z.B. Trocknungszone, Heizzone) bereits vorzeitig chemisch reagieren.

Die eingebrachten Massenströme an Luft und Lösemittel in das System sind während der Produktion annähernd konstant. Prozessbedingt wird direkt nach dem Umluftkatalysator ein heißes Abgas 9 abgesaugt und in die Umgebung ausgetragen. Der Austrag des Abgases erfolgt über ein Stahlrohr mit einem Innendurchmesser von 80 mm mittels eines Radialgebläses. Direkt am Rohrausgang ist meist ein vertikal ausgerichteter Gegenstromwärmeüberträger angeflanscht, welcher mit der thermischen Energie des Abgases Wasserdampf als Schutz- und Reinigungsgas für den Glühprozess des Rohdrahtes erzeugt. Im Standardbetrieb liegt die Abgastemperatur vor dem Verdampfer zwischen 300 - 500°C und nach dem Verdampfer bei etwa 250 - 280°C.

Relevante Schadstoffkomponenten in dem Anlagenabgas während des Lackierprozesses sind Kohlenmonoxid CO, verbleibende flüchtige organische Stoffe (Kohlenwasserstoffe angegeben als gesamt gebundener Kohlenstoff bzw. Gesamt-C) und Stickstoffoxide NOₓ. CO entsteht durch die unvollständige Verbrennung der Kohlenwasserstoffe. Verbleibende Restmengen an Kohlenwasserstoffen in dem Ofenabgas sind darauf zurückzuführen, dass die vorhandenen Lösemitteldämpfe im Umluftprozess speziell im Umluftkatalysator 7' unzureichend oxidiert werden. Dies kann z.B. durch eine Überbeladung der Prozessluft mit Kohlenwasserstoffen (d.h. bei zu hohem Lösemitteleintrag in das System), ein unzureichendes Temperaturniveau im Umluftkatalysator oder auch durch zu wenig reaktiven Sauerstoff (Frischluftzufuhr bzw. Abgasmenge) im System bedingt sein.

NOₓ in Lackdrahtmaschinen ist sogenanntes Brennstoff-NOₓ und kein thermisches NOₓ. Die Entstehung von NOₓ beruht damit im Lackierprozess maßgeblich auf der chemischen Umsetzung der im Brennstoff (Lacklösemittel) gebundenen Anteile an Stickstoff mit Luftsauerstoff. Thermisches NOₓ würde aus dem Stickstoff der Luft bei über 1000°C entstehen. Dennoch fördern erfahrungsgemäß höhere Temperaturen die chemische Umsetzungsrate von N₂ zu NOₓ (speziell im Umluftkatalysator). Ein Hauptverursacher von NOₓ bei der Drahtbeschichtung ist das Lösungsmittel NMP (N-Methyl-2-pyrrolidon), welches Basislösungsmittel des oft verwendeten Polyamidimidlacks (PAI) als Overcoat ist. NMP enthält hohe Mengen an Stickstoff, welcher im Ofenprozess speziell in temperaturhohen Bereichen (z.B. Heizzone, Umluftkatalysator) zu NOₓ oxidiert wird.

Bei Horizontalanlagen zur Lackierung von Runddrähten mit Durchmessern bis 1,6 mm liegen Abgasmengen von ca. 65 - 70 Nm³/h vor. In dem Abgas befinden sich wie oben erwähnt verbleibende Mengen an Stickstoffmonoxid NO, Stickstoffdioxid NO₂, Kohlenmonoxid CO und verbleibende Restlösemittelanteile in Form von unverbrannten Kohlenwasserstoffen CₙHₘ, welche aktiv abgereinigt werden sollen. Die Schadstoffgrenzwerte für industrielles Abgas werden durch verschiedenste gesetzliche Normen festgelegt.

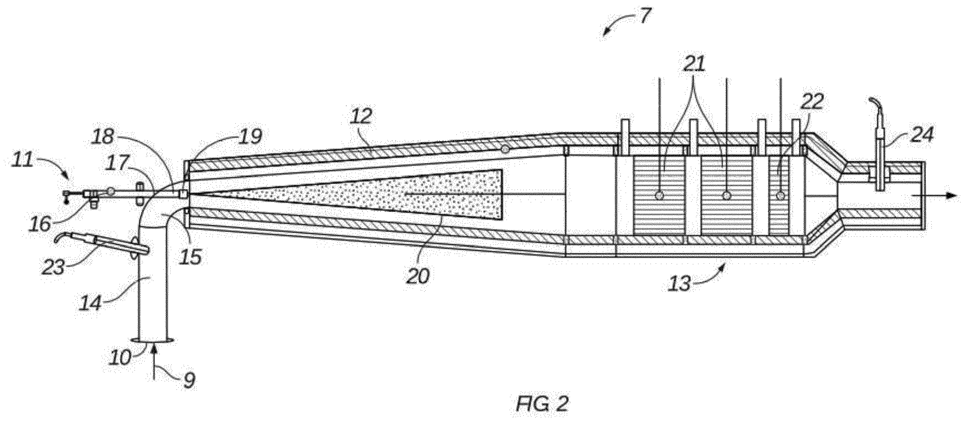

Fig. 2 zeigt eine erfindungsgemäße Abgasreinigungsvorrichtung 7, die ein Verbindungselement 10 zum Verbinden der Abgasreinigungsvorrichtung 7 an das zum Austrag des Abgases 9 vorgesehene Stahlrohr des Ofens 4, eine Zufuhreinrichtung 11, ein konusförmiges Rohrstück 12 und eine Anlage 13 zur selektiven katalytischen Reduktion aufweist. Grundsätzlich kann die Abgasreinigungsvorrichtung 7 in jede Abluftrohrleitung eingebaut werden. Die Ausrichtung Abgasreinigungsvorrichtung 7 kann horizontal oder vertikal sein. Da bei vertikaler Ausrichtung eine erschwerte Zugänglichkeit zur Abgasreinigungsvorrichtung 7 für Wartung und Reparaturen vorliegt, wird bei Horizontalanlagen zur Lackierung von Runddrähten die horizontale Ausrichtung der Abgasreinigungsvorrichtung 7 bevorzugt.

In der gezeigten Ausführungsform wird das Abgas 9 des Umluftofens 4 über ein gerades vertikales Rohrstück 14 zu einem 90° gebogenen Rohrstück 15 und anschließend in das konusförmige Rohrstück 12 geleitet. In dem gebogenen Rohrstück 15, in dem das Abgas 9 von einer vertikalen in eine horizontale Strömung umgeleitet wird, ist die Zufuhreinrichtung 11 zu einem Teil angeordnet, wobei die Zufuhreinrichtung 11 eine Zufuhrleitung aufweist, die in der gezeigten Ausführungsform als gerade Düsenlanze 16 ausgeführt ist. Die Düsenlanze 16 ist horizontal durch ein Loch 17 in dem gebogenen Rohrstück 15 geführt, sodass ein Ende 18 der Düsenlanze 16 in einer kreisförmigen vertikalen Querschnittsfläche an dem Ende des gebogenen Rohrstücks 15 angeordnet ist, das an das konusförmige Rohrstück 12 angrenzt und in dem die Strömung des Abgases 9 horizontal ausgerichtet ist. An dem Ende 18 der Düsenlanze 16 ist eine Austrittsöffnung angeordnet, die in der gezeigten Ausführungsform eine Zweistoffdüse 19 ist. Dabei ist die Zweistoffdüse 19 im Mittelpunkt der kreisförmigen vertikalen Querschnittsfläche an dem Ende des gebogenen Rohrstücks 15 angeordnet, das an das konusförmige Rohrstück 12 angrenzt, sodass der Düsenaustritt der Zweistoffdüse 19 zum Mittelpunkt der kreisförmigen Öffnung des konusförmigen Rohrstücks 12 zeigt, das an das gebogene Rohrstück 12 angrenzt und mit der kreisförmigen vertikalen Querschnittsfläche des gebogenen Rohrstücks 12 zusammenfällt. In Strömungsrichtung des Abgases 9 nimmt der Querschnitt des konusförmigen Rohrstücks 12 zu, sodass das konusförmige Rohrstück 12 einen halben Öffnungswinkel von 4° aufweist. Durch den zunehmenden Querschnitt im konusförmigen Rohrstück 12 wird die Strömungsgeschwindigkeit des Abgases 9 reduziert. Das konusförmige Rohrstück 12 und die Anlage 13 zur selektiven katalytischen Reduktion sind mit einer 50 mm dicken Schicht aus Mineralwolle thermisch isoliert, damit das Abgas 9 zwischen dem Eindüsen des Reduktionsmittels und der Anlage 13 zur selektiven katalytischen Reduktion nicht zu stark abkühlt.

In der gezeigten Ausführungsform wird über die Zweistoffdüse 19 ein Reduktionsmittel zusammen mit Druckluft in das Abgas eingedüst, wobei der sich beim Eindüsen bildende Spray 20 in das konusförmige Rohrstück 12 ragt. Da der Düsenaustritt der Zweistoffdüse 19 zum Mittelpunkt der kreisförmigen Öffnung des konusförmigen Rohrstücks 12 zeigt, wird das Reduktionsmittel in Form von feinen Tröpfchen zusammen mit der Druckluft im Wesentlichen in Strömungsrichtung des Abgases 9 in der Mitte des strömenden Abgases 9 eingedüst, um eine homogene Vermischung des Abgases 9 mit dem Reduktionsmittel zu erzielen. Als Reduktionsmittel wird in der gezeigten Ausführungsform eine wässrige Harnstofflösung mit einem Massenanteil von Harnstoff (NH₂)₂CO von 32,5 % verwendet. Diese wässrige Harnstofflösung ist aus der Fahrzeugindustrie als "AdBlue" bekannt. Nach dem Eindüsen des Reduktionsmittels in das Abgas 9 über die Zweistoffdüse 19 wird der Harnstoff (NH₂)₂CO mithilfe des heißen Abgases 9 zu Ammoniak NH₃ und Isocyansäure HNCO thermolysiert. Das Wasser H₂O des Reduktionsmittels verdampft vollständig und reagiert mit der Isocyansäure HNCO zu Ammoniak NH₃ und Kohlendioxid CO₂. Durch die homogene Durchmischung mit dem Abgas 9 und die längere Verweilzeit im konusförmigen Rohrstück 12 aufgrund der abnehmenden Strömungsgeschwindigkeit des Abgases 9 wird im konusförmigen Rohrstück 12 der Harnstoff und die Isocyansäure vollständig zu dampfförmigen Ammoniak umgewandelt.

In der gezeigten Ausführungsform ist dem konusförmigen Rohrstück 12 in Strömungsrichtung des Abgases die Anlage 13 zur selektiven katalytischen Reduktion nachgeschaltet, die zwei Entstickungskatalysatoren 21 und einen Oxidationskatalysator 22 aufweist. Die Entstickungskatalysatoren 21 - auch SCR-Katalysatoren genannt - sind beschichtete Vollmetallträger mit einem ersten Metallträger und einer Zellendichte von 300 cpsi. Metallträger sind im Gegensatz zu keramischen Produkten durch eine wesentlich höhere Temperaturbeständigkeit und mechanische Beständigkeit gekennzeichnet. Dadurch könnte der SCR-Katalysator auch in Lackdrahtofentypen eingesetzt werden, wo weitaus höhere Ablufttemperaturen von bis zu 650°C vorliegen. Die mechanische Beständigkeit schützt die Metallkatalysatoren vor Beschädigungen beim Transport, welche bei keramischen Katalysatoren leichter auftreten. Auf den ersten Metallträger ist ein erster Washcoat aus Aluminiumoxid mit sehr hoher spezifischer Oberfläche aufgeprägt, welcher mit den relevanten Oxiden von Titan, Vanadium und/oder Wolfram beschichtet ist. Durch den aufgebrachten ersten Washcoat erhöht sich die Reaktionsfläche der Entstickungskatalysatoren 21 signifikant, wodurch die Effizienz der ablaufenden chemischen Reaktionen gesteigert wird. Besonders wichtig ist bei den beschichteten Metallkatalysatoren die geringere Speicherfähigkeit an Ammoniak, welche eine viel raschere Nachregelung der AdBlue-Dosierung bei veränderlichen NOₓ-Beladungen des Systems erlaubt. Damit kann das Risiko von stöchiometrischer Überdosierung an AdBlue signifikant reduziert werden, was für die Bildung von Harnstoff-Ablagerungen im Entstickungskatalysator 21 sehr relevant ist. Keramische Extrudate neigen aufgrund ihres strukturellen Aufbaus mit hoher Porosität verstärkt zur Speicherung von Ammoniak, wodurch die chemischen Reaktionen und somit auch die Regelung der Harnstoff-Dosierung besonders träge verlaufen.

In den beiden Entstickungskatalysatoren 21 der Anlage 13 zur selektiven katalytischen Reduktion reagiert das verdampfte Ammoniak NH₃ mit Stickstoffmonoxid NO und Stickstoffdioxid NO₂ sowie Sauerstoff O₂ aus dem Abgas 9 und der Druckluft zu Stickstoff N₂ und Wasserdampf H₂O.

Nach den beiden in Serie geschalteten Entstickungskatalysatoren 21 ist in Strömungsrichtung des Abgases 9 der Oxidationskatalysator 22 angeordnet, der ein beschichteter Vollmetallträger mit einem zweiten Metallträger und einer Zellendichte von 300 cpsi ist. Auf den zweiten Metallträger ist ein zweiter Washcoat aus Aluminiumoxid mit sehr hoher spezifischer Oberfläche aufgeprägt, welcher mit Platin und/oder Palladium beschichtet ist. Durch den aufgebrachten zweiten Washcoat erhöht sich die Reaktionsfläche der Oxidationskatalysators 22 signifikant, wodurch die Effizienz der ablaufenden chemischen Reaktionen gesteigert wird. In dem Oxidationskatalysator 22 reagieren im Abgas 9 verbleibende Kohlenwasserstoffe CₙHₘ und Kohlenmonoxid CO zu Kohlendioxid CO₂ und Wasserdampf H₂O. Überschüssiges Ammoniak NH₃, das in den Entstickungskatalysatoren 21 nicht reagiert hat, reagiert zu Stickstoff N₂ und H₂O. Zwischen den in Serie geschalteten beiden Entstickungskatalysatoren 21 und dem Oxidationskatalysator 22 ist jeweils zwischen zwei benachbarten Katalysatoren ein Spalt mit einer Mindestspaltweite von 10 mm vorhanden, um eine bessere Durchmischung der Abgasströmung durch generierte Turbulenzen nach dem Austritt des Abgases 9 aus den Katalysatoren zu erzielen.

In der gezeigten Ausführungsform ist bei dem geraden vertikalen Rohrstück 14 ein erster NOₓ-Sensor 23 zum Messen der Konzentration der Stickoxide im dem Abgas 9 vor der Eindüsung des Reduktionsmittels angeordnet. Weiters ist in Strömungsrichtung des Abgases 9 nach dem Oxidationskatalysator 22 ein zweiter NOₓ-Sensor 24 zum Messen der Konzentration der Stickoxide im dem Abgas 9 nach der Anlage 13 zur selektiven katalytischen Reduktion angeordnet. Die mithilfe des ersten 23 und des zweiten 24 NOₓ-Sensors gemessenen Stickoxid-Konzentrationen werden zur Berechnung der Menge an Ammoniak verwendet, die stöchiometrisch benötigt wird, um die Konzentration der Stickoxide in dem Abgas 9 nach der Anlage 13 zur selektiven katalytischen Reduktion auf einen gesetzlich vorgegebenen Soll-Wert zu reduzieren. Die NOₓ-Messung mit dem ersten NOₓ-Sensor 23 dient zur Berechnung der stöchiometrischen Soll-Injektionsmenge an Harnstofflösung. Mit der NOₓ-Messung mit dem zweiten NOₓ-Sensor 24 wird das Resultat des chemischen Prozesses überprüft bzw. die Dosiermenge der Harnstofflösung entsprechend geregelt. Weiters wird zur Berechnung der stöchiometrisch erforderlichen Menge an Ammoniak der Massenstrom und die Temperatur des Abgases 9 berücksichtigt. Dabei wird der Massenstrom des Abgases beispielsweise mithilfe eines über ein Prandtlrohr gemessenen dynamischen Drucks oder eines über ein Venturirohr gemessenen Differenzdrucks des Abgases 9 ermittelt. Die für die Umwandlung der Stickoxide des Abgases 9 stöchiometrisch erforderliche Menge an Ammoniak wird verwendet, um die Menge des über die Zweistoffdüse 19 eingedüsten Harnstoffs bzw. der Harnstofflösung zu ermitteln. Aufgrund der parallelen Eindüsung des Reduktionsmittels in das Abgas 9 wird nicht nur die Ablagerung durch Wandfilmbildung des Reduktionsmittels minimiert, sondern auch ein viel feineres Signal der aktuellen NOₓ-Ausgangskonzentration bzw. der aktuellen Dosiermenge mit geringen Oszillationen und geringen Amplituden erzielt.

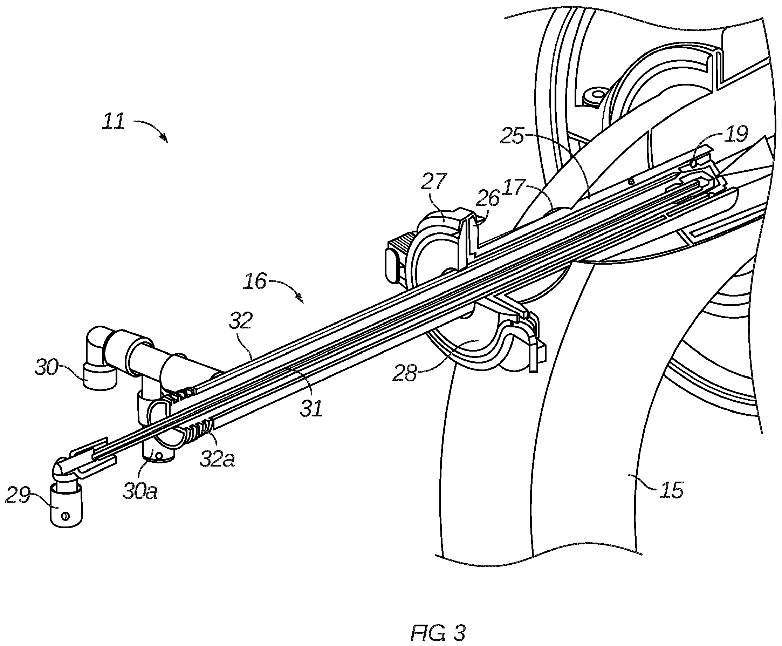

Fig. 3 zeigt das gebogene Rohrstück 15 und die Zufuhreinrichtung 11 der erfindungsgemäßen Abgasreinigungsvorrichtung 7 gemäß Fig. 2. Der im gebogenen Rohrstück 15 angeordnete Teil der Zufuhreinrichtung 11 ist von einem Schutzrohr 25 umhüllt, das die Düsenlanze 16 und die Zweistoffdüse 19 vom durch das gebogene Rohrstück 15 strömende Abgas abschirmt. Dadurch verhindert das Schutzrohr mögliche Ablagerungen von Lackrückständen auf der zum Teil kühlen Oberfläche der Düsenlanze 16 und der Zweistoffdüse 19 und schützt hinzu die gesamte Zweistoffdüse 19 gegen das teils quer zuströmende Abgas 9. Zum Schutz der Austrittsöffnung der Zweistoffdüse 19 erstreckt sich das Schutzrohr 25 in Strömungsrichtung des Abgases 9 bis zur Austrittsöffnung. Dadurch ist die Austrittsöffnung der Zweistoffdüse 19 vom Schutzrohr 25 vollständig umhüllt und wird somit vor hohen Temperaturen und Strömungseinflüssen des vorbeiströmenden Abgases 9 geschützt. Das Schutzrohr 25 ist an dem gebogenen Rohrstück angeschweißt und ragt aus diesem teilweise heraus, wobei an dem außerhalb des gebogenen Rohrstücks 15 angeordneten Ende des Schutzrohrs 25 ein Flansch 26 befestigt ist. Der Flansch 26 des Schutzrohres 25 ist mithilfe eines Spannrings 27 mit einem an der Düsenlanze 16 befestigten Flansch 28 verbunden, sodass die Düsenlanze 16 und die Zweistoffdüse 19 in dem Schutzrohr 25 fixiert sind. Bei Lösen des Spannrings 27 kann die Düsenlanze 16 mit der Zweistoffdüse 19 zur Wartung der Zweistoffdüse 19 aus dem Schutzrohr 25 herausgezogen werden.

In der gezeigten Ausführungsform weist die Zufuhreinrichtung 11 eine erste Leitung 29 für die Zufuhr des Reduktionsmittels und eine zweite Leitung 30 für die Zufuhr der Druckluft mit einem Standarddruck von 6 bar auf. Die erste Leitung 29 führt das Reduktionsmittel von einer Pumpe (nicht gezeigt) in ein Innenrohr 31, das in der Düsenlanze 16 angeordnet ist und das Reduktionsmittel zur Zweistoffdüse 19 führt. Die zweite Leitung 30 führt Druckluft in ein um das Innenrohr 31 koaxial angeordnetes Außenrohr 32, das in der Düsenlanze 16 angeordnet ist und die Druckluft zur Zweistoffdüse 19 führt. Kurz vor Eintritt der zweiten Leitung 30 in das Außenrohr 32 ist eine Abzweigung 30a der zweiten Leitung 30 angeordnet, die zu einem Drucklufteingang der Pumpe führt. Im Fall einer Leckage der zweiten Leitung 30 würde dann sowohl durch die Düse als auch durch die Pumpe keine Druckluft strömen, was durch einen Drucksensor der Pumpe sofort detektiert werden würde. Damit kann der Eintrag von flüssigem Reduktionsmittel ohne Druckluft in eine zwangsweise stark erhitzte Düse und damit einhergehende Harnstoffablagerungen unterbunden werden. Am Beginn des Außenrohrs 32 weist die Düsenlanze 16 einen Kompensator 32a auf, welcher thermisch bedingte, unterschiedliche Längsausdehnungen von Innen- 31 und Außenrohr 32 ausgleichen kann.

In Strömungsrichtung des Abgases 9 vor der Anlage 13 zur selektiven katalytischen Reduktion wird die Temperatur des Abgases 9 zur Kontrolle gemessen, da die Abgastemperatur zwischen 220 und 550 °C liegen soll. Abgastemperaturen unter 220 °C hemmen die Zersetzung von Harnstoff in Ammoniak bzw. können dessen Auskristallisation fördern. Abgastemperaturen oberhalb von 550 °C bedingen chemisch bedingt größere Mengen an Harnstoff und können leichter zu Überhitzungen der Zweistoffdüse 19 führen. Außerhalb des zulässigen Temperaturbereiches zwischen 220 und 550 °C wird kein Reduktionsmittel eingedüst. Weiters wird in der erfindungsgemäßen Vorrichtung eine Drahtbewegung über ein Aufwicklersignal überprüft, wobei ohne einer Drahtbewegung ebenfalls kein Reduktionsmittel eingedüst wird. Mithilfe einer Messung der Konzentration von Sauerstoff im Abgas 9 in Strömungsrichtung des Abgases 9 vor der Anlage 13 zur selektiven katalytischen Reduktion wird überprüft, ob in die erfindungsgemäße Vorrichtung Lack eingebracht wird oder nicht. Bei einer fehlenden Einbringung von Lack wird ebenfalls kein Reduktionsmittel über die Zweistoffdüse 19 in das Abgas 9 eingedüst. Bei Ausfall der erfindungsgemäßen Vorrichtung bzw. deren Abstellung werden die Reduktionsmittel-führenden Leitungen und die Düsenlanze 16 gespült und vollständig entleert. Eine Überprüfung des Füllstands eines Reduktionsmittel-Tanks mittels Schwimmerschalters sichert die Pumpe gegen Trockenlauf. Ausreichend lange Vorkühlzeiten der Zweistoffdüse 19 mit Druckluft vor Start der Injektion des Reduktionsmittels unterbindet eine Überhitzung des Innenrohrs 31 der Düsenlanze 16 und damit Sieden von der wässrigen Harnstofflösung und Harnstoffausfall in der Zweistoffdüse 19. Ausreichend langes Spülen der Reduktionsmittel-führenden Leitungen mit Druckluft nach Injektionsende eliminiert verbleibendes Reduktionsmittel in der Düsenlanze 16 und in der Zweistoffdüse 19.

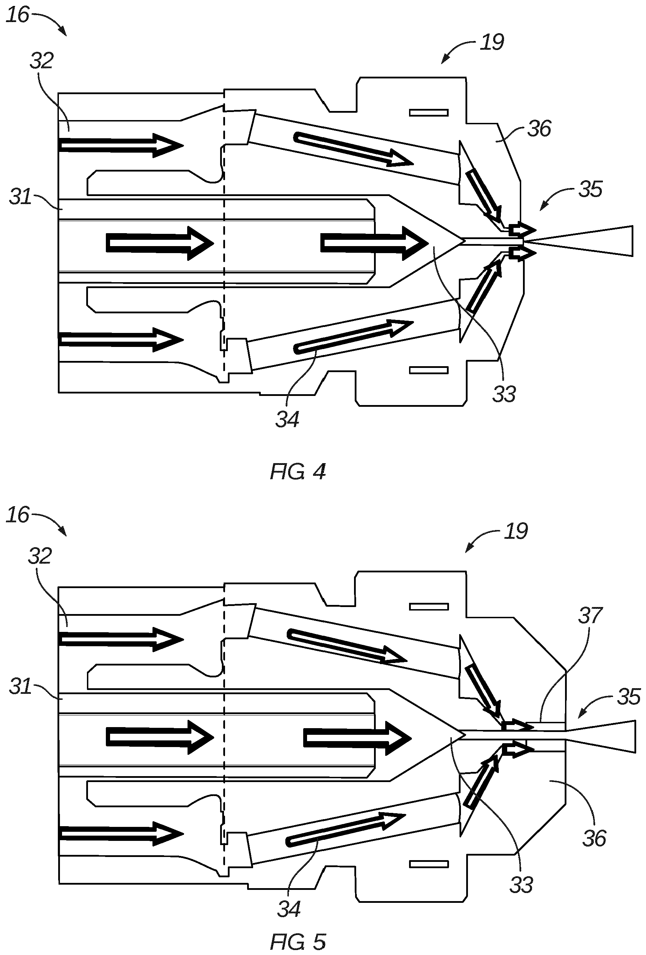

Fig. 4 zeigt eine erste Ausführungsform der Zweistoffdüse 19, wobei die Zweistoffdüse 19 als außenmischende Zweistoffdüse ausgeführt ist. Die außenmischende Zweistoffdüse weist eine Düseninnenkammer 33, eine Düsenaußenkammer 34 und einen Düsenaustritt 35 auf, der in einer Düsenkappe 36 angeordnet ist. In der gezeigten Ausführungsform gemäß Fig. 3 führt das Innenrohr 31 der Düsenlanze 16 ein Gemisch aus dem Reduktionsmittel und einer weiteren Druckluft zu der Düseninnenkammer 33 der außenmischenden Zweistoffdüse und das Außenrohr 32 der Düsenlanze 16 die Druckluft zu der um die Düseninnenkammer 33 koaxial angeordnete Düsenaußenkammer 34. Die Düseninnenkammer 33 und die Düsenaußenkammer 34 sind getrennt mit dem Düsenaustritt 35 verbunden, damit das Gemisch aus dem Reduktionsmittel und der weiteren Druckluft getrennt von der Druckluft aus der außenmischende Zweistoffdüse austritt. Die Düsenkappe 36 weist eine geringe Tiefe auf, wodurch die Zerstäubung des Reduktionsmittels direkt am Düsenaustritt 35 erfolgt. Dadurch ergibt sich in der zweiten Leitung 30 zur Pumpe ein wesentlich geringerer Gegendruck, sodass als Pumpe beispielsweise eine Membranpumpe eingesetzt werden kann. Die Düsenkappe 36 der außenmischenden Zweistoffdüse kann jederzeit abgeschraubt und durch eine andere Kappe ausgetauscht werden.

Fig. 5 zeigt eine zweite Ausführungsform der Zweistoffdüse 19, wobei die Zweistoffdüse 19 als innenmischende Zweistoffdüse ausgeführt ist. Die innenmischende Zweistoffdüse weist eine Düseninnenkammer 33, eine Düsenaußenkammer 34, eine Mischkammer 37 und einen Düsenaustritt 35 auf. In der gezeigten Ausführungsform gemäß Fig. 5 führt das Innenrohr 31 der Düsenlanze 16 das Reduktionsmittel zu der Düseninnenkammer 33 der innenmischenden Zweistoffdüse und das Außenrohr 32 der Düsenlanze 16 die Druckluft zu der um die Düseninnenkammer 33 koaxial angeordnete Düsenau-ßenkammer 34. Die Düseninnenkammer 33 und die Düsenaußenkammer 34 sind mit der Mischkammer 37 zum Mischen des Reduktionsmittels mit der Druckluft verbunden. Von der Mischkammer 37 tritt das Reduktionsmittel mit der Druckluft gemischt über den Düsenaustritt 35 aus der innenmischenden Zweistoffdüse aus. Bei Verwendung einer innenmischenden Zweistoffdüse kann über das Innenrohr 31 ein reines Reduktionsmittel wie die wässrige Harnstofflösung ohne Druckluft der Düseninnenkammer 33 zugeführt werden. Dabei kann beispielsweise eine elektrische Zahnradpumpe den nötigen Druck aufbauen und die Dosierrate des Reduktionsmittels beispielsweise über eine Differenzdruckmessung an den Positionen vor und nach einem Proportionalventil der Zahnradpumpe geregelt werden.

## Patentansprüche

1. Vorrichtung (1) zur Herstellung von Lackdrähten, mit einer Auftragsvorrichtung (3) zum Auftragen zumindest einer Lackschicht, einem Ofen (4) zum Verfestigen der Lackschicht und mit einer Abgasreinigungsvorrichtung (7) zum Entfernen von zumindest Stickoxiden aus einem Abgas (9) des Ofens (4), wobei die Abgasreinigungsvorrichtung (7) eine Anlage (13) zur selektiven katalytischen Reduktion von Stickoxiden in dem Abgas (9) des Ofens und eine Zufuhreinrichtung (11) zum Zuführen eines Reduktionsmittels, bevorzugt einer ammoniakhaltigen Verbindung, insbesondere Harnstofflösung, in das Abgas (9) des Ofens (4), aufweist, **dadurch gekennzeichnet, dass** die Zufuhreinrichtung (11) zumindest eine Austrittsöffnung aufweist, die derart ausgestaltet ist, dass das Reduktionsmittel im Wesentlichen in Strömungsrichtung des Abgases (9) aus der Austrittsöffnung austritt.

2. Vorrichtung (1) nach Anspruch 1, **dadurch gekennzeichnet, dass** zumindest ein Teil der Zufuhreinrichtung (11) in einem gebogenen Rohrstück (15) angeordnet ist, wobei das gebogene Rohrstück (15) eine Krümmung zwischen 60 und 150°, bevorzugt zwischen 75 und 120°, besonders bevorzugt zwischen 80 und 100°, insbesondere im Wesentlichen 90° aufweist.

3. Vorrichtung (1) nach Anspruch 2, **dadurch gekennzeichnet, dass** der in dem gebogenen Rohrstück (15) angeordnete Teil der Zufuhreinrichtung (11) abgesehen von der Austrittsöffnung von einem Schutzrohr (25) umhüllt ist.

4. Vorrichtung (1) nach einem der Ansprüche 1 bis 3, **dadurch gekennzeichnet, dass** die Zufuhreinrichtung (11) eine Zufuhrleitung mit der zumindest einen Austrittsöffnung aufweist, wobei die Austrittsöffnung eine Düse aufweist, die im Wesentlichen in Strömungsrichtung des Abgases (9) zum Eindüsen des Reduktionsmittels im Wesentlichen in Strömungsrichtung des Abgases (9) ausgerichtet ist.

5. Vorrichtung (1) nach Anspruch 4, **dadurch gekennzeichnet, dass** die Düse der Austrittsöffnung eine Zerstäubungsdüse zum Zerteilen des Reduktionsmittels, insbesondere in feine Tröpfchen, ist.

6. Vorrichtung (1) nach Anspruch 5, **dadurch gekennzeichnet, dass** die Zerstäubungsdüse eine Zweistoffdüse (19) ist, die eine Düseninnenkammer (33) und eine Düsenaußenkammer (34) aufweist, wobei die Düseninnenkammer (33) zum Zuführen eines ersten Mediums ist, wobei das erste Medium das Reduktionsmittel, bevorzugt die ammoniakhaltige Verbindung, insbesondere die Harnstofflösung, beinhaltet, wobei die Düsenaußenkammer (34) zum Zuführen eines zweiten Mediums, bevorzugt einer Druckluft, ist.

7. Vorrichtung (1) nach Anspruch 6, **dadurch gekennzeichnet, dass** die Zweistoffdüse (19) eine außenmischende Zweistoffdüse ist, die einen Düsenaustritt (35) aufweist, wobei die Düseninnenkammer (33) und die Düsenaußenkammer (34) getrennt mit dem Düsenaustritt (35) zum getrennten Austreten des ersten Mediums und des zweiten Mediums, bevorzugt der Druckluft, aus der Zweistoffdüse verbunden sind.

8. Vorrichtung (1) nach Anspruch 6, **dadurch gekennzeichnet, dass** die Zweistoffdüse (19) eine innenmischende Zweistoffdüse ist, die eine Mischkammer (37) aufweist, wobei die Düseninnenkammer (33) und die Düsenaußenkammer (34) mit der Mischkammer (37) zum Mischen des ersten Mediums mit dem zweiten Medium, bevorzugt der Druckluft, in der Mischkammer (37) verbunden sind.

9. Vorrichtung (1) nach einem der Ansprüche 1 bis 8, **dadurch gekennzeichnet, dass** die Abgasreinigungsvorrichtung (7) in Strömungsrichtung des Abgases (9) nach der Zufuhreinrichtung (11) und vor der Anlage (13) zur selektiven katalytischen Reduktion von Stickoxiden ein konusförmiges Rohrstück (12) zum Durchströmen des Abgases (9) aufweist, wobei der Durchmesser des konusförmigen Rohrstücks (12) in Strömungsrichtung des Abgases (9) zunimmt, wobei das zugeführte Reduktionsmittel zumindest abschnittsweise in das konusförmige Rohrstück (12) eingebracht wird.

10. Vorrichtung (1) nach Anspruch 9, **dadurch gekennzeichnet, dass** das konusförmige Rohrstück (12) einen halben Öffnungswinkel zwischen 1 und 10°, bevorzugt zwischen 2 und 7°, besonders bevorzugt zwischen 3 und 5°, insbesondere im Wesentlichen 4° aufweist.

11. Vorrichtung (1) nach einem der Ansprüche 1 bis 10, **dadurch gekennzeichnet, dass** die Anlage (13) zur selektiven katalytischen Reduktion zumindest einen Entstickungskatalysator (21) und zumindest einen Oxidationskatalysator (22) zum Abbau von Kohlenmonoxid und/oder Kohlenwasserstoffen und/oder Ammoniak aufweist, wobei bevorzugt zumindest zwei, insbesondere genau zwei, Entstickungskatalysatoren (21) in Strömungsrichtung des Abgases (9) hintereinander vorgesehen sind.

12. Vorrichtung (1) nach Anspruch 11, **dadurch gekennzeichnet, dass** der zumindest eine Entstickungskatalysator (21) einen ersten beschichteten Metallträger und einen ersten Washcoat und der zumindest eine Oxidationskatalysator (22) einen zweiten Metallträger und einen zweiten Washcoat aufweist, wobei bevorzugt der erste Washcoat Oxide von Titan, Vanadium und/oder Wolfram und der zweite Washcoat Platin und/oder Palladium aufweist.

13. Verfahren zur Herstellung von Lackdrähten, wobei auf einen Metalldraht zumindest eine Lackschicht aufgetragen wird, welche in einem Ofen (4) verfestigt wird, wobei ein Abgas (9) aus dem Ofen (4) zumindest von Stickoxiden befreit wird, wobei das Abgas (9) aus dem Ofen (4) einer selektiven katalytischen Reduktion von Stickoxiden unterzogen wird, wobei ein Reduktionsmittel, bevorzugt eine ammoniakhaltige Verbindung, insbesondere eine Harnstofflösung, über eine Zufuhreinrichtung (11) dem Abgas (9) zugeführt wird, **dadurch gekennzeichnet, dass** das Reduktionsmittel im Wesentlichen in Strömungsrichtung des Abgases (9) in das Abgas (9) eingebracht wird.

14. Verfahren nach Anspruch 13, **dadurch gekennzeichnet, dass** das eingebrachte Reduktionsmittel, bevorzugt die eingebrachte ammoniakhaltige Verbindung, insbesondere die eingebrachte Harnstofflösung, flüssig ist und in einem konusförmigen Rohrstück (12) verdampft, wobei Ammoniak gebildet wird.

15. Verfahren nach Anspruch 13 oder 14, **dadurch gekennzeichnet, dass** der Mengenstrom des Abgases (9) und die Konzentrationen der Stickoxide in dem Abgas (9) in Strömungsrichtung vor dem Zuführen des Reduktionsmittels und in Strömungsrichtung nach der selektiven katalytischen Reduktion ermittelt werden, wobei basierend auf dem ermittelten Mengenstrom des Abgases (9) und den ermittelten Konzentrationen der Stickoxide im Abgas (9) die Menge des eingebrachten Reduktionsmittels, bevorzugt der eingebrachten ammoniakhaltigen Verbindung, insbesondere der eingebrachten Harnstofflösung, ermittelt wird.
